# EUROPEAN PATENT SPECIFICATION

(11) **EP 1 348 120 B1**
(45) Date of publication and mention of the grant of the patent: **08.03.2006**
(21) Application number: 01272703.8
(22) Date of filing: 18.12.2001
(51) Int. Cl.: G01N 21/64

(54) **LUMINESCENCE IMAGER**
LUMINESZENZ-ABBILDUNGSVORRICHTUNG
IMAGEUR LUMINESCENT

(30) Priority: 03.01.2001 GB 0100043
(43) Date of publication of application: 01.10.2003
(60) Divisional application: 03078526.5
(73) Proprietor: Packard Instrument Company, Inc., Meriden, Connecticut 06450 (US)
(72) Inventor: RUSHBROOKE, John, Gordon, Newport Beach, CA 92660 (US); HOOPER, Claire, Elizabeth, Newport Beach, CA 92660 (US)
(74) Representative: Nash, Keith Wilfrid
(86) International application number: PCT/GB2001/005585
(87) International publication number: WO 2002/054049

(56) References cited:
- WO-A-00/05568
- WO-A-00/05569
- WO-A-98/01743
- GB-A- 2 315 130

## Description

### Field of Invention

This invention concerns a system for alternatively measuring epi-fluorescence or luminescence produced by samples in a sample plate.

### Background

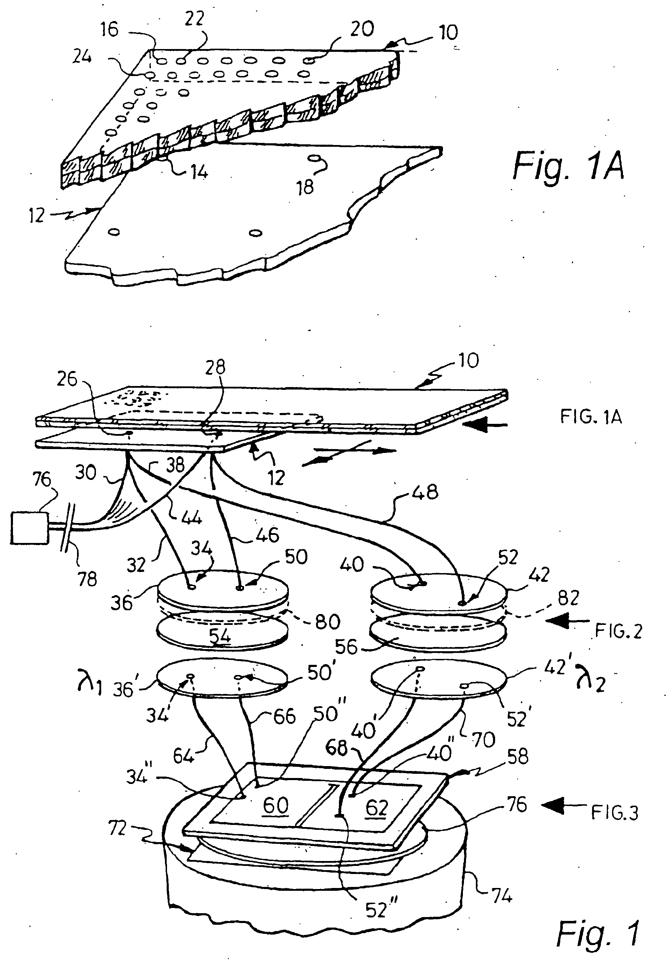

Reference is made to Patent Specifications GB 2339900, GB 2339901 and GB 2351555, which describe an epifluorescence imaging system designed to measure the fluorescence emitted from the bottom of an array of samples when they are irradiated from beneath by excitation light. Figures 1 and 1A, taken from these Applications, show the use of an array of typically 8 x 12 trifurcated fibre optic bundles arrayed in a presentation plate 12 on which the sample plate 10 is placed. Plate 10 includes a plurality of wells 16, 20, 22, 24. One sub-set 30 of fibres within a bundle is used to bring in the excitation light, and two other sub-sets 32, 38 of fibres in each bundle collect emitted fluorescent light into two separate filter channels to enable simultaneous measurement of dual wavelengths λ₁, λ₂. After the filters 54, 56, the light is transmitted through single fibres (64, 66; 68, 70), 2 x 96 of them, to a fibre optic input face of a CCD camera 74.

More particularly, each of the apertures such as 14, 18 in the presentation plate 12 serves as a termination for a fibre bundle made up of 45 individual fibres. The fibres are shown terminating in two of the apertures for illustration only, one designated 26 and the other 28.

Each bundle of 45 fibres is made up of three groups of 15, one group such as 30 extending to an excitation light source 76, one group such as 32 conveying fluorescence light from a well aligned with the aperture 26 to an aperture 34 in a presentation disc 36. The third group of 15 fibres 38 extends to another opening 40 in a second presentation disc 42, for conveying fluorescence light to that other opening 40.

The three groups of 15 fibres making up the other illustrated bundle leading to and from aperture 28 are denoted by reference numerals 44, 46 and 48 respectively and these extend from the excitation light source in the case of group 44 and to two other apertures 50 and 52 respectively in the two presentation discs 36 and 42.

Each of the latter includes 96 apertures arranged regularly over the circular area of each disc, and similar discs 36' and 42' are aligned with the discs 36 and 42. Suitable optical filter discs 54 and 56 are sandwiched between discs 36 and 36', and discs 42 and 42'.

Apertures in the two discs 36, 36' (42, 42') are aligned on a one to one basis and fibres lead from each of the aligned apertures such as 34' and disc 36' to unique apertures in two groups of 96 apertures arranged in a rectilinear matrix in an output plate generally designated 58. The first such matrix is designated 60 and the second 62 and the fibres such as 64 from aperture 34' and 50' lead to apertures 34" and 50" in the matrix region 60 and the fibres 68 to 70 from apertures 40' and 52' in disc 42' lead to apertures such as 40" and 52'' in matrix 62.

The two matrixes 60 and 62 together form a generally square outline which conforms approximately to the square aspect ratio of an input window illustrated at 72 in the camera 74.

The excitation light source is denoted by reference numeral 76 and between it and the 96 groups of 15 fibres such as 30 and 44 is located a filter 78.

An angle collimating device 76 in the form of a thin plate may be located between the matrix array of fibre ends 34'', 50'' etc. and the input window 72 of the camera 74.

Filters 80, 82 for blocking Skew rays may be incorporated, as shown in dashed line in Figure 1.

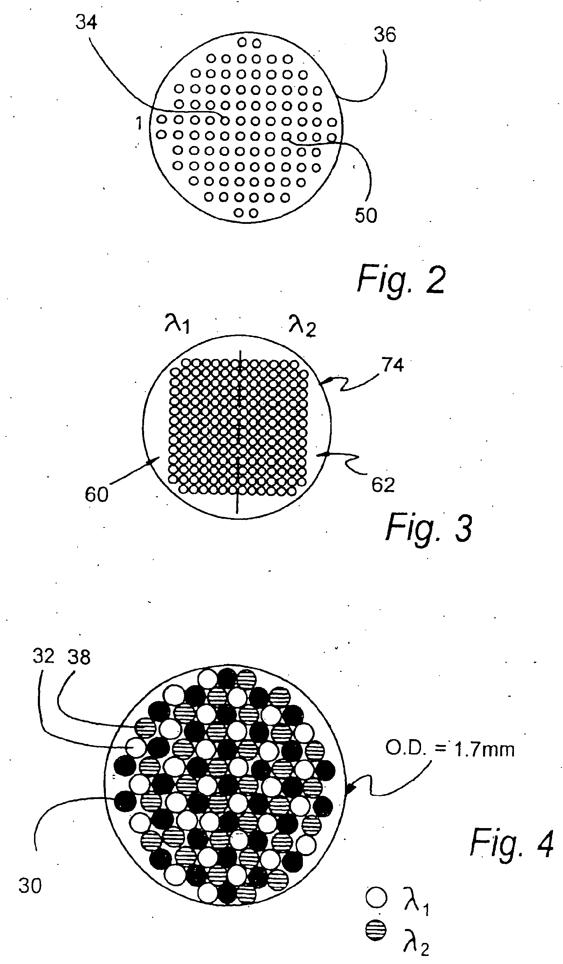

The arrangement of the apertures such as 34 and 50 and 40 and 52 on each of the plates 36 and 42 is as shown in Figure 2. Two of the openings are arbitrarily shown at 34 and 50.

The arrangement of the two groups of 96 fibre ends in the two matrices 60 and 62 is shown in Figure 3. The camera typically has a generally square aspect ratio and the arrangement of the 192 apertures making up the two matrices 60 and 62 makes the best use of the available generally square outline.

The arrangement of the three groups of 15 fibres making up the bundle of fibres at each presentation plate aperture such as 16, is as shown in Figure 4. Here the solid black fibre ends correspond to those in the excitation bundle 30, the clear circles correspond to those in the fibre bundle 32 leading to the first filter path containing filter 54, and the shaded circle corresponds to the fibres in the bundle 38 leading to the other wavelength selective path containing the second filter 56.

Typically an image can be taken every second, and repeated at approximately one-second intervals.

This system has proved to be an efficient, highly sensitive measurer of fluorescence in dual wavelengths, and the ability to measure dual wavelengths simultaneously is of great value for certain assays, such as FRET assays, where a change in the ratio of the signal strengths in the two wavelengths is an indicator of chemical binding or some other attribute of the assay.

This 96-channel system can be used to measure 96-well microtitre plates, or by stepping the microtitre plate over the presentation plate, larger assay presentations such as 384, 846, 1536, 3465...., well plates (i.e. having an n²*96 pattern, where n is an integer).

This system is not optimised for the measurement of luminescence for which no excitation is needed, and in which a sample emits light by virtue of a chemical reaction occurring when reagents are interacting in the sample well.

Thus, for fluorescence, the fibre bundle is stood off below the well since light has to illuminate the sample evenly and receive fluorescence light with uniform efficiency from all parts of the well. This still applies even if the sample is a cellular layer on the base of the well.

Therefore although this epi-fluorescence system can be used to measure luminescence, it is not optimal, and is generally sensitive enough only for the brightest types of samples and assays. Examples of such assays incluee detection using luciferase enzyme; calcium detection, for example in cells, linked to the enzyme aequorin, which produces a flash of light during the reaction; and alkaline phosphatase linked assays using enhanced chemiluminescence substrates.

### Summary of the Invention

According to one aspect of the present invention an imaging system as has been proposed for use with epi-fluorescence may be adapted for use with luminescence samples (which in general produce less light than epi-tluorescence samples) by optimising the position and type of fibre optic read out.

In particular, the present invention is directed at a system for alternatively measuring epi-fluuorescence or luminescence produced by samples in a sample plate, wherein for measuring epi-fluorescence a first presentation plate having an array of silica optical fibres of NA of about 0.2 or less is presented to at least some of the samples in the sample plate at a small spacing therefrom to convey epi-fluorescence from the samples to a CCD camera. According to the invention, a second presentation plate for measuring luminescence which is locatable immediately adjacent or in contact with the sample plate to present the ends of a matching array of optical fibres to the samples, each fibre in the said matching array having a numerical aperture (NA) greater than 0.2 and greater than that of the optical fibres for conveying epi-fluorescence, and serving to convey luminescence emitted by the samples to a CCD camera.

In one embodiment of the invention it is proposed to use a second presentation plate in which, say, 8 x 12 single fibres are mounted, each with its face immediately below or in contact with the base of the sample plate. The end face of each fibre which is to view the plate is preferably polished. Typically the fibres are optical fibres of plastics fibre material, say 2mm diameter, which is available at low cost with relatively high numerical aperture (NA) - e.g. NA = 0.5. This is to be compared with the NA (typically about 0.2) of the silica fibres which are commonly used to make the fibre bundles for an epi-fluorescence system. Silica fibre material is used to minimise the auto-fluorescence background that can occur in the presence of excitation light. The use of plastics material for fibres in fluorescence systems is ruled out since plastics materials tend to fluoresce.

Using such an arrangement of plastics fibres, a factor of light gathering improvement of the order of 10-20 has been obtained for luminescence samples when compared with the measurement of these samples using an epi-fluorescence system. This factor results both from the closer placing of the end of each fibre to the sample, and from the high NA of the fibre. This makes possible the measurement of weaker types of luminescence.

According to an embodiment of the invention an epi-fluorescence imaging system may be adapted for use with luminescence samples by leading a second set of high NA fibres to the input of the CCD to which the fibres employed for epi-fluorescence samples are also led, the two sets of fibres being arranged interstitially, so that a second CCD camera is not needed.

Although the combined system will be used either for fluorescence or for luminescence, there is no risk of cross talk between the closely spaced fibres, since only one set at a time is illuminated.

The luminescence light may be analysed in two wavelengths simultaneously by means of a bifurcation of each of the fibres employed when looking for luminescence. Thereafter there would be two parallel filter channels, and the two sets of fibres would be mounted interstitially to the two sets of fluorescence transfer fibres.

Certain types of luminescence assays benefit from analysis at two wavelengths. Examples of this include multi-labelled assay systems, where more than one label has been used in an assay. A further example is resonant energy transfer type assays, where a donor molecule emits light at one wavelength and a receptor molecule emits light at a second wavelength. The degree of energy transfer between the two molecules is measured by the ratio of the intensity of the two wavelengths emitted by the molecules.

The analysis algorithms already proposed (such as referred to in the Patent Specifications listed earlier) for performing measurements on fluorescence derived signals can be readily extended to luminescence signals from the CCD camera. Thus for example in the case of a 96-fibre array, a set of geometrically fixed 96 spots of light (or 2 x 96 spots) can be registered at a fixed displacement on the CCD from the 2 x 96 fluorescence spots.

A fixed array of fibres mounted in a presentation plate for luminescence measurements may be used independently of the epi-fluorescence system. An example would be a 16 x 24 fibre array to measure 384 channels simultaneously.

The fibres in the filter region may be arranged on a 100mm-diameter filter and the system would require its own CCD camera, but this would be the only significant additional element.

The 384 fibres at the input to the CCD camera may be re-arranged if required to accommodate the aspect ratio of the CCD.

Such an arrangement can also measure a 1536 well plate by means of a 2 x 2 stepping of the sample plate relative to the presentation plate.

As before, each fibre can be bifurcated to enable dual wavelength analysis. This system represents a low-cost, optically efficient means of measuring luminescence in larger size well plates, (384, 1536 wells or more).

In an arrangement embodying the invention for luminescence samples, a fixed fibre array for the measurement of arrays of samples has the following advantages over a lens based method.
(1) absence of parallax (so that wells in the corners of a plate are measured as efficiently as those in the centre of the plate) which is only avoided by using an (expensive) telecentric lens;
(2) no vignetting;
(3) no need to focus;
(4) there is much more efficient light gathering from a lens.

Thus an optical fibre placed immediately under a well of about the same diameter has optical efficiency approximately equal to the (NA)² = (0.5)² = 0.25. On the other hand a quality telecentric lens (say F = 1) imaging a whole place (size 110 x 75mm) onto a CCD (size 25 x 25mm) so that the lens demagnification is m = 110/25 - 4.4, has optical efficiency 1/{2F(1 + m)}² = 0.0086.

A set of optical fibres as proposed is therefore about 30 times more efficient, and much less expensive than a quality lens.

The advantages of the invention are achievable if the end of each fibre that is to collect light from a sample is very close to, if not touching, the sample, either above or below the sample, such as a well in a multi-well plate, for example.

A system is described herein for inspecting light emitting samples such as are contained in a well plate from each of which at least two optical fibres or bundles of fibres lead to a CCD camera, the fibres or bundles of fibres form all samples being arranged in two sets, a first set which are formed from a non-fluorescing material and a second set which are formed from a material which may fluoresce but enables the fibres formed therefrom to have a higher numerical aperture than those of the first set, one of the said at least two fibres linked to each sample belonging to the one set, and the other to the other set, wherein the fibres are arranged interstitially at the input to the camera, the light emitted from each fibre falling on a uniquely addressable region of the CCD, and the addressing of the CCD is arranged so that the addresses associated with one set of fibres, or the other, are read out and refreshed to produce an output signal for analysis.

By reading out the addresses relating to the first set of fibres, an output signal is obtained relating to any fluorescence from the samples.

By reading out the addresses relating to the second set of fibres an output signal will relate to any luminescence produced by the samples.

Where the samples need to be excited so as to produce fluorescence, additional fibres lead to the samples from an excitation source.

Additional sets of fibres, each set illuminating a different unique set of addresses of the CCD, may be provided with appropriate wavelength selection as by filtering, to enable dual wavelength analysis to be performed on light emitting samples.

Using bi-furcated fibres in the second set, so as to produce 2N fibres leading from N wells, with one set of N leading to the CCD input, may allow the other set to be used for transmitting excitation radiation from a suitable source to the samples, thereby obviating the need for a third set of N fibres to the wells, for conveying excitation radiation thereto.

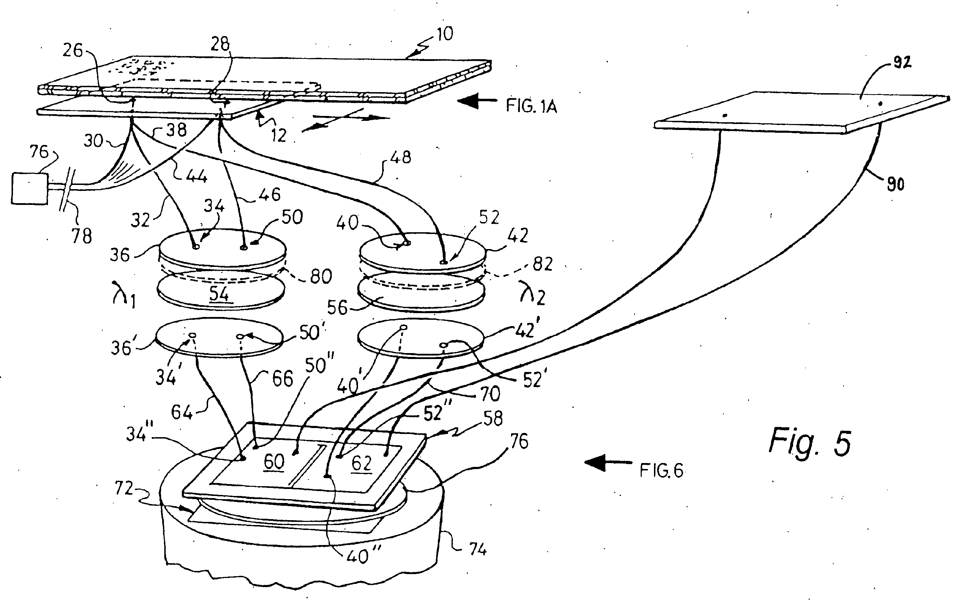

The invention is illustrated by way of example in Figure 5 onwards.

The invention extends the current epi-fluorescence system into a whole new application, namely detection of luminescence, at a minimal cost, and in a technically simple manner. As before, microtitre plates having 384, 846, 1536....wells, based on a 96-channel pattern, can be measured by stepping the sample plate over the presentation plate 92. Figure 5 shows a 96-channel luminescence reading head. 96 plastic fibres (90), each having a diameter of 2mm and a numerical aperture of about 0.5, are arranged in an 8 by 12 array at the reading head.

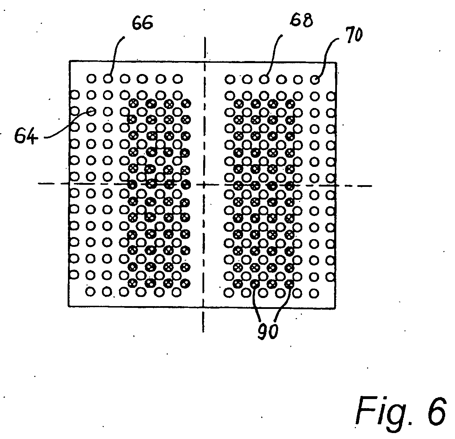

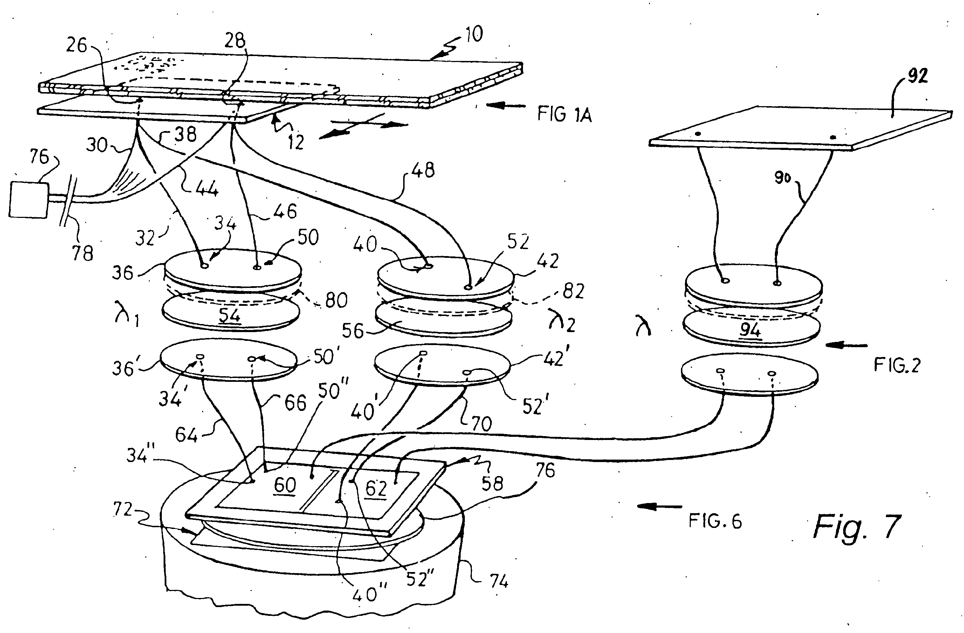

A filter 94 can be added to this luminescence system, as shown in Figure 7, which needs the same arrangement of 96 extra fibres (90, shown as cross-hetched circles) at the CCD shown in Figure 6.

The arrangement of fibres in the filter space would be as in Figure 2. As with the fluorescence version, there is a rearrangement of the fibres from the sample presentation plate 92 to the filter space, if a filter is used, and again to the input to the CCD camera 74. Note that the filter space does not necessarily need to be as thick as in the fluorescence version, as there is no excitation light that has to be blocked from entering the emission path, allowing simpler, thinner filters to be used for the luminescence filter space.

Figure 6 shows the interstitial arrangement of the fibres 90 to be used for transmitting luminescence light to the camera, with those (64, 66, 68, 70) of the known epi-fluorescence system. All the fibres lead to the one entrance to the CCD camera 74.

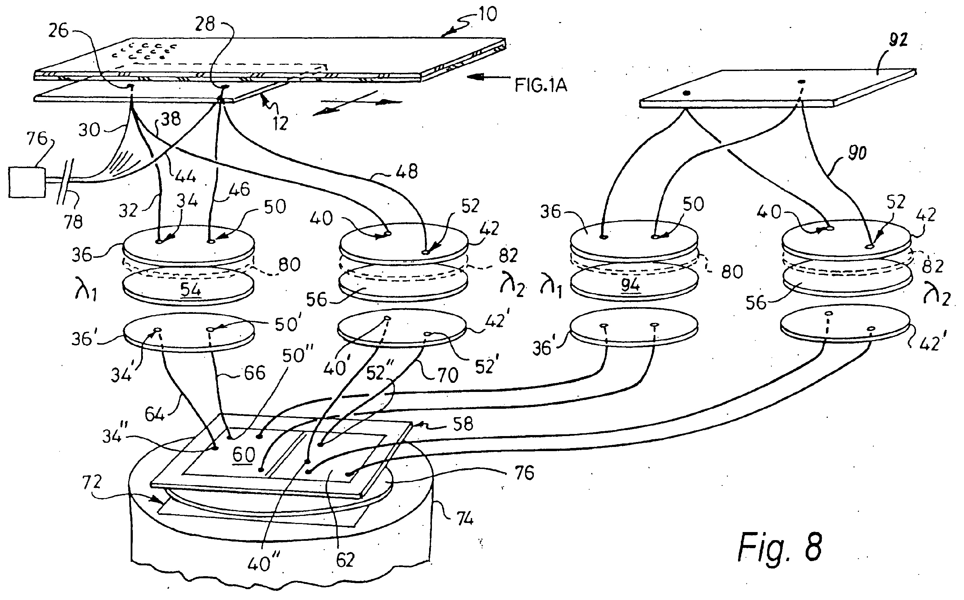

Bifurcation of the luminescence fibres is shown in Figure 8.

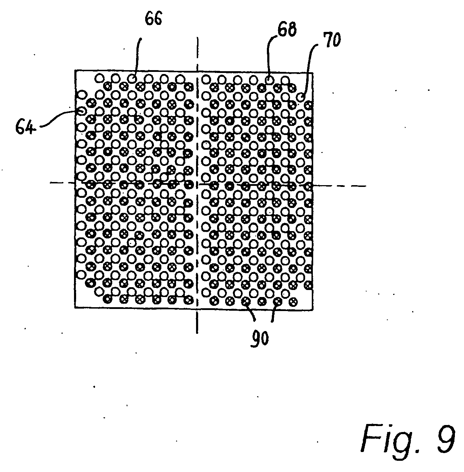

Interstitial placement of the two sets of fibres is again shown in Figure 9.

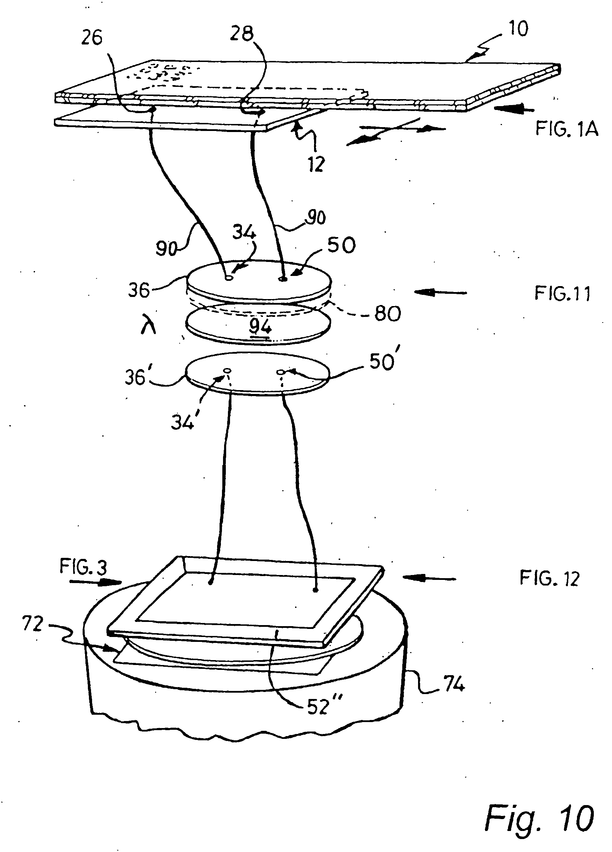

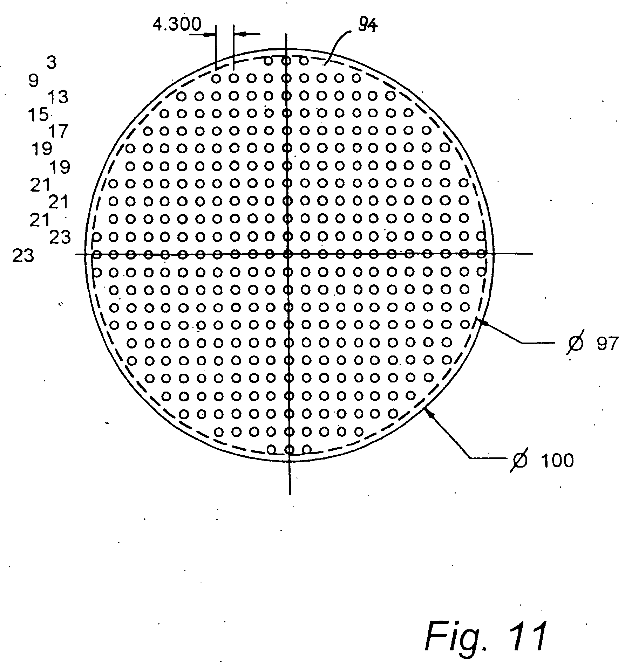

Figure 10 shows an example of a 16 x 24 array of fibres 90, which allows for simultaneous inspection of all the wells in a 384 well plate. As shown in Figure 11, the 384 fibres of 2mm diameter are arranged on a 100mm diameter filter 94 where they extend through the filter space of the luminescence system. The number of circles in each row is indicated to the left of the filter in the Figure.

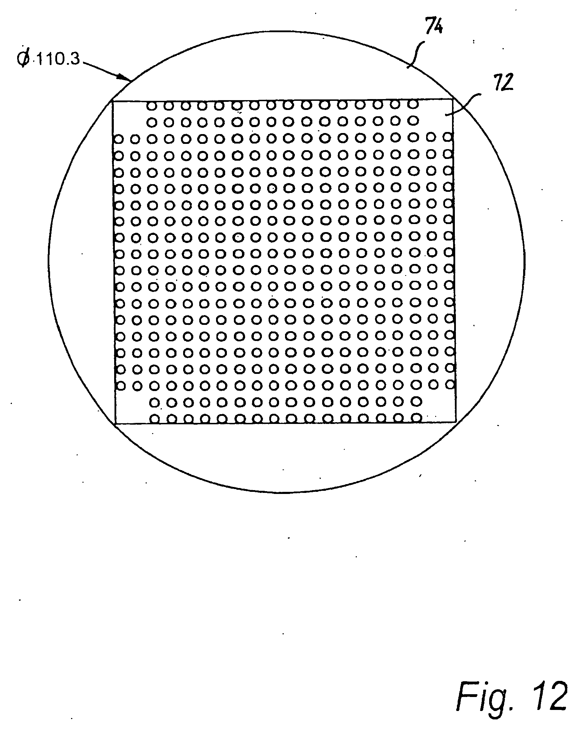

Figure 12 shows the arrangement of the 384 fibres at the CCD camera input, with a spacing of 4mm, within the 78 x 78mm input area 72 of the camera 74.

## Claims

1. A system for alternatively measuring epi-fluorescence or luminescence produced by samples in a sample plate, wherein for measuring epi-fluorescence a first presentation plate having an array of silica optical fibres of NA of about 0.2 or less is presented to at least some of the samples in the sample plate at a small spacing therefrom to convey epi-fluorescence from the samples to a CCD camera, **characterised by** a second presentation plate for measuring luminescence which is locatable immediately adjacent or in contact with the sample plate to present the ends of a matching array of optical fibres to the samples, each fibre in the said matching array having a numerical aperture (NA) greater than 0.2 and greater than that of the optical fibres for conveying epi-fluorescence, and serving to convey luminescence emitted by the samples to a CCD camera.

2. A system according to claim 1, wherein the optical fibres associated with the second presentation plate have an NA of about 0.5.

3. A system according to claim 1 or claim 2, wherein the optical fibres associated with the second presentation plate are made of plastics material.

4. A system according to any of claims 1 to 3, wherein the ends of the optical fibres associated with the second presentation plate and viewing the sample plate, are polished.

5. A system according to any of claims 1 to 4, wherein the fibres for conveying epi-fluorescence are arranged interstitially with the fibres for conveying luminescence, and all the fibres are led to a single CCD camera, and an excitation source for epi-fluorescence measurements is switched off during luminescence measurements.

6. A system according to any one of claims 1 to 5, wherein the fibres for conveying luminescence are bifurcated to enable the luminescence to be conveyed to the CCD camera by fibre subsets including two parallel filter channels.

7. A system according to claim 6, wherein the fibres for conveying epi-fluorescence are also arranged in subsets including two filter channels, and the two luminescence subsets are mounted interstitially to the two epi-fluorescence subsets.

8. A system according to any of claims 1 to 7, wherein the fibres are re-arranged at the CCD camera to accommodate the aspect ratio of the camera, and an analysis algorithm is employed to measure the luminescence signals received at the CCD camera, said algorithm being a modification of a known algorithm for measuring epi-fluorescence signals.

9. A system according to any of claims 1 to 8, wherein the area of the first presentation plate is smaller than the area of the sample plate, and the sample plate and the first presentation plate are relatively movable to enable luminescence from different groups of samples to be measured in succession.

10. A system according to any of claims 1 to 8, wherein the area of the second presentation plate is smaller than the area of the sample plate and the latter and the second presentation plate are relatively movable to enable epi-fluorescence from different groups of samples to be measured in succession.

## Revendications

1. Système pour mesurer de manière alternative l'épifluorescence ou la luminescence produite par des échantillons dans une plaque d'échantillons, dans lequel, pour mesurer l'épifluorescence, une première plaque de présentation présentant un réseau de fibres optiques en silice d'une OE d'environ 0,2 ou moins est présentée à au moins quelques-uns des échantillons dans la plaque d'échantillons à un petit espace de distance de ceux-ci pour transférer l'épifluorescence des échantillons à une caméra CCD, **caractérisé par** une deuxième plaque de présentation pour mesurer la luminescence qui est localisable de manière immédiatement adjacente à ou en contact de la plaque d'échantillons pour présenter les extrémités d'un réseau correspondant de fibres optiques aux échantillons, chaque fibre dans ledit réseau correspondant présentant une ouverture numérique (ON) supérieure à 0,2 et supérieure à celle des fibres optiques pour le transfert de l'épifluorescence, et servant à transférer la luminescence émise par les échantillons à une caméra CCD.

2. Système selon la revendication 1, dans lequel les fibres optiques associées à la deuxième plaque de présentation présentent une ON d'environ 0,5.

3. Système selon la revendication 1 ou la revendication 2, dans lequel les fibres optiques associées à la deuxième plaque de présentation sont fabriquées dans un matériau en plastique.

4. Système selon l'une quelconque des revendications 1 à 3, dans lequel les extrémités des fibres optiques associées à la deuxième plaque de présentation et visionnant la plaque d'échantillons sont polies.

5. Système selon l'une quelconque des revendications 1 à 4, dans lequel les fibres pour le transfert de l'épifluorescence sont agencées de manière interstitielle avec les fibres pour le transfert de la luminescence, et toutes les fibres sont conduites à une caméra CCD unique, et une source d'excitation pour les mesures de l'épifluorescence est déconnectée durant les mesures de la luminescence.

6. Système selon l'une quelconque des revendications 1 à 5, dans lequel les fibres pour le transfert de la luminescence sont bifurquées pour permettre à la luminescence d'être transférée à la caméra CCD par des sous-ensembles de fibres comprenant deux canaux de filtration parallèles.

7. Système selon la revendication 6, dans lequel les fibres pour le transfert de l'épifluorescence sont également agencées en sous-ensembles comprenant deux canaux de filtration, et les deux sous-ensembles de luminescence sont montés de manière interstitielle sur les deux sous-ensembles d'épifluorescence.

8. Système selon l'une quelconque des revendications 1 à 7, dans lequel les fibres sont ré-agencées au niveau de la caméra CCD pour tenir compte du rapport d'aspect de la caméra, et un algorithme d'analyse est utilisé pour mesurer les signaux de luminescence reçus au niveau de la caméra CCD, ledit algorithme étant une modification d'un algorithme connu pour la mesure des signaux d'épifluorescence.

9. Système selon l'une quelconque des revendications 1 à 8, dans lequel la surface de la première plaque de présentation est plus petite que la surface de la plaque d'échantillons, et la plaque d'échantillons et la première plaque de présentation sont relativement mobiles pour permettre à la luminescence de différents groupes d'échantillons d'être mesurée tour à tour.

10. Système selon l'une quelconque des revendications 1 à 8, dans lequel la surface de la deuxième plaque de présentation est plus petite que la surface de la plaque d'échantillons et cette dernière et la deuxième plaque de présentation sont relativement mobiles pour permettre à l'épifluorescence de différents groupes d'échantillons d'être mesurée tour à tour.

## Patentansprüche

1. System zur alternativen Messung von durch Proben in einer Probenplatte erzeugter Epi-Fluoreszenz oder Lumineszenz, wobei zur Messung von Epi-Fluoreszenz eine erste Darstellungsplatte mit einer Anordnung von optischen Quarz- bzw. Glasfasern mit einer NA von ungefähr 0,2 oder weniger vor zumindest einigen der Proben in der Probenplatte in einem kleinen Abstand dazu zur Leitung von Epi-Fluoreszenz von den Proben zu einer CCD-Kamera angeordnet ist, **gekennzeichnet durch** eine zweite Darstellungsplatte zur Messung von Lumineszenz, welche unmittelbar an der Probenplatte anliegend oder in Kontakt mit dieser zur Anordnung der Enden einer passenden Anordnung von optischen Fasern zu den Proben anbringbar ist, wobei jede Faser in der passenden Anordnung eine numerische Apertur (NA) von größer als 0,2 und größer als diejenige der optischen Fasern zur Leitung von Epi-Fluoreszenz aufweist und zur Leitung von **durch** die Proben ausgesandter Lumineszenz zu einer CCD-Kamera dient.

2. System nach Anspruch 1, wobei die der zweiten Darstellungsplatte zugeordneten optischen Fasern eine NA von ungefähr 0,5 aufweisen.

3. System nach Anspruch 1 oder 2, wobei die der zweiten Darstellungsplatte zugeordneten optischen Fasern aus Kunststoffen hergestellt sind.

4. System nach einem der Ansprüche 1 bis 3, wobei die Enden der optischen Fasern, welche der zweiten Darstellungsplatte zugeordnet sind und die gleiche Probe erfassen, poliert ausgebildet sind.

5. System nach einem der Ansprüche 1 bis 4, wobei die Fasern zur Übertragung von Epi-Fluoreszenz zusammen mit den Fasern zur Übertragung von Lumineszenz in Zwischenräumen angeordnet sind, und alle Fasern zu einer einzigen CCD-Kamera geführt sind, und eine Anregungsquelle für Epi-Fluoreszenzmesssungen bei Lumineszenzmessungen ausgeschaltet ist.

6. System nach einem der Ansprüche 1 bis 5, wobei die Fasern zur Übertragung von Lumineszenz zur Ermöglichung der Übertragbarkeit der Lumineszenz zu der CCD-Kamera durch Untergruppen von Fasern mit parallelen Filterkanälen verzweigt ausgebildet sind.

7. System nach Anspruch 6, wobei die Fasern zur Übertragung von Epi-Fluoreszenz ebenfalls in Untergruppen mit zwei Filterkanälen angeordnet sind, und die zwei Lumineszensuntergrupen zusammen mit den zwei Epi-Fluoreszenzuntergruppen in Zwischenräumen angeordnet sind.

8. System nach einem der Ansprüche 1 bis 7, wobei die Fasern an der CCD-Kamera zur Anpassung des Bild- bzw. Darstellungverhältnisses der Kamera umgeordnet sind, und ein Analysealgorithmus zur Messung der an der CCD-Kamera empfangenen Lumineszenzsignale zur Anwendung kommt, wobei der Algorithmus eine Modifikation eines bekannten Algorithmus zur Messung von Epi-Fluoreszenzsignalen ist.

9. System nach einem der Ansprüche 1 bis 8, wobei der Bereich der ersten Darstellungsplatte kleiner ist als der Bereich der Probenplatte, und wobei die Probenplatte und die erste Darstellungsplatte zur Ermöglicliung von Lumineszenz von in aufeinanderfolgender Weise zu messenden unterschiedlichen Probengruppen relativ einstellbar ausgebildet sind.

10. System nach einem der Ansprüche 1 bis 8, wobei der Bereich der zweiten Darstellungsplatte kleiner ist als der Bereich der Probenplatte und die letztere und die zweite Darstellungsplatte zur Ermöglichung von Epi-Fluoreszenz von in aufeinanderfolgender Weise zu messenden unterschiedlichen Probengruppen relativ einstellbar ausgebildet sind.
